# EUROPEAN PATENT SPECIFICATION

(11) **EP 3 329 778 B1**
(45) Date of publication and mention of the grant of the patent: **12.06.2019**
(21) Application number: 16207212.8
(22) Date of filing: 28.12.2016
(51) Int. Cl.: A01N 59/20, A01N 25/28, A01N 25/34, A01P 1/00

(54) **PROCESS FOR THE SYNTHESIS OF ANTIMICROBIAL COPPER NANOPARTICLES**
VERFAHREN ZUR SYNTHESE VON ANTIMIKROBIELLEN KUPFER NANOPARTIKELN
PROCÉDÉ DE SYNTHÈSE DE NANOPARTICULES DE CUIVRE ANTIMICROBIENNES

(30) Priority: 30.11.2016 SI 201600288
(43) Date of publication of application: 06.06.2018
(73) Proprietor: Univerza v Mariboru Fakulteta za strojnistvo, 2000 Maribor (SI); IOS, Institut za okoljevarstvo in senzorje, d.o.o., 2000 Maribor (SI)
(72) Inventor: Ramezani, Maedeh, Tehran (IR); Kosak, Aljosa, 3000 Celje (SI); Lobnik, Aleksandra, 2311 Hoce (SI)
(74) Representative: Flak, Antonija

(56) References cited:
- WO-A1-2013/035366
- WO-A1-2016/115237
- CN-A- 105 206 818
- Michele L De Souza ET AL: "Cu nanoparticles enable plasmonic-improved silicon photovoltaic devicesw", Phys. Chem. Chem. Phys. Phys. Chem. Chem. Phys, 31 December 2012 (2012-12-31), pages 15722-15728, XP055392620, Retrieved from the Internet: URL:https://web.uvic.ca/~agbrolo/c2cp43475 j.pdf [retrieved on 2017-07-20]
- SHAOBO WANG ET AL: "Synthesizing and stabilizing copper nanoparticles by coating with a silica layer in aqueous solution", CERAMIC SOCIETY OF JAPAN. JOURNAL, vol. 120, no. 1402, 1 January 2012 (2012-01-01), pages 248-250, XP055392608, Tokyo, JP ISSN: 1882-0743, DOI: 10.2109/jcersj2.120.248

## Description

### Field of the invention

The present invention belongs to the field of processes for preparation of antimicrobial nanoparticles, more particularly to the field of processes for preparation of antimicrobial copper nanoparticles which include functional alkoxysilanes, preferably aminopropyltrimethoxysilane (APTMS), as precursors, which function as capping agents.

### The technical problem

With the development of nanotechnology many different fields of applications of nanostructured materials have emerged. Nanotechnology plays an important role in the field of health. Recent studies on nanomaterials revealed that different metallic and metal oxide nanoparticles such as silver, copper and zinc due to their large surface to volume ratio and crystalline structure may have very promising and potent roles as antimicrobial agents. Such nanoparticles are already being used in biomedical and biological applications. These materials exhibit high antibacterial activity, low toxicity, chemical stability, long lasting action period and thermal resistance in comparison to organic antibacterial agents. Due to the stability of these nanoparticles, they can be used in paint or plaster as a bactericide agent for coating hospital equipment, medical instruments and devices, water treatment and food processing, as well as fittings for public places, public transport, paints, toys and kitchen, school and hospital utensils. The bactericidal effect of metal nanoparticles has been attributed to their small size and high surface to volume ratio, which allows them to interact closely with microbial membranes.

Copper and its complexes have been widely used as cheap and effective materials for sterilizing liquids, textiles and also human tissues for centuries. Therefore, metallic Cu-NPs may be a promising antibacterial agent in the future.

Especially copper and its complexes are gaining importance in many known and developing technology fields. They can be found in the field of biotechnological applications, such as antifungal and antibacterial coatings for biomedical devices or antimicrobial packages, as well as superior disinfectants for hospital generated wastewaters containing infectious microorganisms.

A variety of techniques for preparation of antibacterial copper nanoparticles are known, which can be roughly divided into categories: (i) photoreduction and (ii) reduction using various reducing agents in association with protective polymers or surfactants.

According to the available data from the literature the preparation of copper nanoparticles in a conventional manner by using copper nitrate is being carried out in some basic steps including reduction agent, usually in an organic solvent, or by high-temperature, leading to the thermal reduction.

So far known copper nanoparticles preparation processes involve the thermal decomposition, microemulsions, UV irradiation, reduction of aqueous copper salts, and are therefore not user friendly, as they include high temperatures, toxic organic solvents, UV radiation and similar.

The technical problem, which is solved by the present invention, is how to design a process for preparing antibacterial, low toxic, chemically stable, long active and thermally resistant copper nanoparticles, which will be useful in a broad field, preferably in the field of textile industry. The process should allow formation of nanostructures having homogenous sizes and morphology, with excellent antimicrobial properties. In addition, the process should be performed at the lowest possible reaction temperatures and should employ environmentally friendly chemicals in order to eliminate use of toxic organic solvents.

The aim and purpose of the present invention is a process for preparation of antimicrobial copper nanoparticles with superior antimicrobial properties.

### State of the art

In the so far available literature there is no similar method for preparation of copper nanoparticles involving use of aminipropyletrimethoxysilane (APTMS) as a capping agent.

Several scientific articles report antibacterial activity of copper nanoparticles, which have been prepared in a different manner.

Cubillo et al. describe in the article "Antibacterial activity of copper monodispersed nanoparticles into sepiolite" (J. Mater Science 2006) Cu/Sepiolite particles suitable for biological applications and exhibited a high antibacterial activity (99.9%) against *Staphylococcus aureus* and *Escherichia coli.* Copper nanoparticles were embedded into submicron particles of sepiolite (Mg₈Si₁₂O₃₀(OH)₄(H₂O)₄.8H₂O).

In the article "Copper Nanoparticle/Polymer Composites with Antifungal and Bacteriostatic Properties" (Chem. Mater. 2005, 17, 5255-5262) Cioffi et al. describe a three-electrode cells for preparation of copper nanoparticles with the sacrificial anode electrolysis technique. For the preparation of copper nanocomposites, the copper nanoparticles are embedded in a polymer matrix, for which three different water insoluble and commercially available polymers, including polyvinylmethyl ketone (PVMK), poly(vinyl chloride) (PVC), and polyvinylidenefluoride (PVDF), were used.

In the article "Copper Oxide Nanoparticles: Synthesis, Characterization and Their Antibacterial Activity" (J Clust Sci (2011) 22:121-129) Jadhav et al. report about preparation of copper oxide nanoparticles by electrochemical reduction method using tetra butyl ammonium bromide (TBAB) as a structure directing agent, tetrahydro furan (THF) and acetonitrile (ACN). The nanoparticles were tested for their antibacterial activity against *E. coli* and *Staphylococcus* strains, which proved to be excellent. Lee et al. describe in the article "Large-scale synthesis of copper nanoparticles by chemically controlled reduction for applications of inkjet-printed electronics" (Nanotechnology 19 (2008) 415604) that they have prepared copper nanoparticles with chemical reduction of copper sulfate with sodium hypophosphite in ethylene glycol in the presence of a polymer surfactant (PVP), which is included to prevent aggregation and give dispersion stability.

Article "Characterization of copper oxide nanoparticles for antimicrobial applications" (International Journal of Antimicrobial Agents 33 (2009) 587-590) discloses that CuO nanoparticles obtained by thermal plasma technology showed activity against a range of bacterial pathogens, including meticillin-resistant *S. aureus* (MRSA) and *E. coli,* with minimum bactericidal concentrations (MBCs) ranging from 100 mg/mL to 5000 mg/mL. Ramani et al. report in the article "Air stable colloidal copper nanoparticles: Synthesis, characterization and their surface-enhanced Raman scattering properties" (Physica E: Low-dimensional Systems and Nanostructures Volume 77, 2016, Pages 65-71) that they have prepared air stable colloidal copper nanoparticles by a simple chemical reduction method using octadecylamine as a stabilizing agent in toluene without any inert gas.

WO 2013/035366 describes the synthesis of copper nanoparticles in polyethylene glycol in the presence of a base and absence of a trialkoxysilane capping agent.

The present invention differs from the above described state of the art in that the preparation process of particles with particle size in the range from 5 nm to 70 nm uses functional alkoxysilanes as new capping agents. The copper particles prepared by the synthesis process according to the invention exhibit 100% antimicrobial activity against three microbial species, namely bacterium *S. aureus,* bacterium *E. coli* and fungus *Candida albicans.*

### Description of the invention

The essence of the process for synthesis of copper nanoparticles is in that it includes high-temperature polyol synthesis based on organic colloidal solution of copper nanoparticles with the average particle size in the range from 5 nm to 170 nm using functional trialkoxysilane molecules as capping agents (which limit particle growth).

The process for synthesis of antimicrobial copper nanoparticles includes the following steps:
a) heating-up a polyol medium to 160ºC and the polyol synthesis of the reddish-brown colloid solution of ethylene glycol and copper nanoparticles;
b) heating the prepared colloidal solution of copper and ethylene glycol to 120 °C for 20 min and after removing a reaction container from oil bath, drop-wise addition of the functional trialkoxysilanes as capping agents;
c) mixing for 20 hours at room temperature, resulting in formation of the reddish-brown colloidal solution of copper and ethylene glycol.

First, in step a) colloidal copper nuclei are prepared by the polyol synthesis, which is based on solvent reduction. Polyol medium for the reaction consists of a mixture of alcohols with multiple hydroxyl groups, such as ethylene glycol (98%). A variety of inorganic copper (II) salts can be used as salt precursors in the concentration 0.05 mol/L, wherein the preferred option is copper (II) nitrate trihydrate in ethylene glycol solution.

The reaction conditions are:
- temperature 160 °C ;
- time 1 hour at 160°C;
- pH 7 to 8.
Copper nanoparticles synthesized according to this procedure are spherical with the average particle size in the range from 5 nm to 170 nm.

In the next step b), the prepared colloidal solution of copper in ethylene glycol is cooled down from 160 to 120 °C. After that, the reaction flask is removed from heater and the reaction is stirred at room temperature. While stirring with a magnetic stirrer, functional trialkoxysilane as the capping agent is added drop-wise to the 10 ml of the prepared colloidal solution of copper in ethylene glycol.

As the precursor trialkoxysilane is used, which works as a capping agent, and has a general formula R*Si(OR')₃, wherein the R' is chosen from a group consisting of methyl, ethyl, propyl, butyl and hexyl, and R* is chosen from a functional, mostly donor organic group, which consists of for example amino, thiol, hydroxy, carboxyl, cyano, phosphate, nitrile, sulphate groups. Preferentially the trialkoxysilane precursor is aminopropyltrimethoxysilane, its concentration in the range between 0.027 mol/L and 0.33 mol/L, which corresponds to the molar ratio AMPTS to Cu(NO₃)₂ in the range between 1 and 20.2, preferably the molar ratio is 1 ; 3; 6.6; 10.41; 14.32; 17.35; in 20.2.

In the step c), the prepared solution is mixed for 20 hours at room temperature. The reaction results in the formation of reddish brown colloidal solution of copper in ethylene glycol.

The product of the synthesis process according to the invention with the use of a new capping agent are copper nanoparticles, which have been characterized with transmission electron microscopy (TEM), analysis of specific surface area (BET), UV-Vis spectroscopy, differential scanning calorimetry (DSC), Fourier Infrared Spectroscopy (FTIR), and analysis of antimicrobial properties according to test American Society for Testing and Materials (ASTM) E2149-10. The results of the mentioned analysis are shown in the following figures:

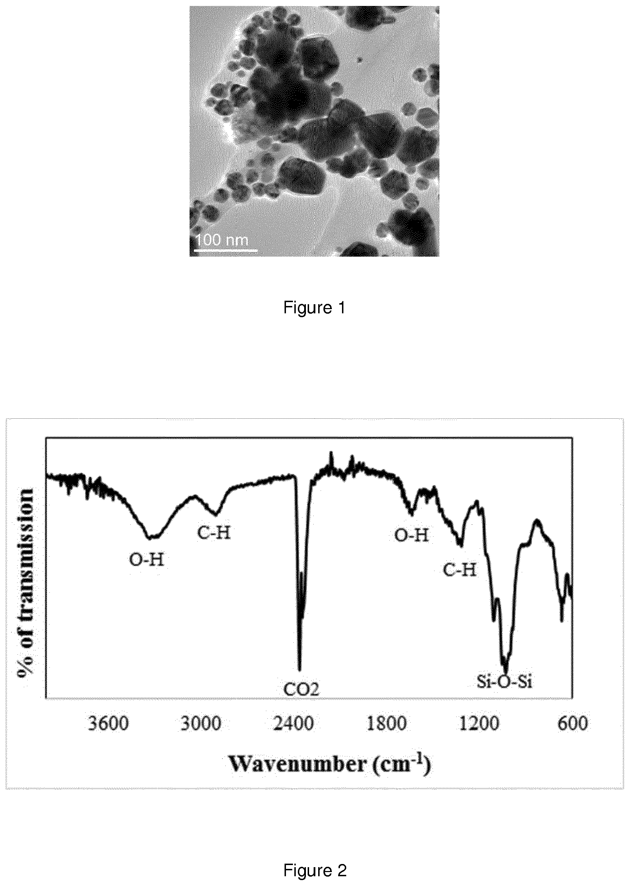

- Figure 1:: Images of prepared copper nanoparticles obtained with transmission electron microscopy (TEM)
- Figure 2:: FT-IR spectrum of textiles covered with prepared copper nanoparticles in molar ratio APTMS/Cu(NO₃)₂ = 14.32

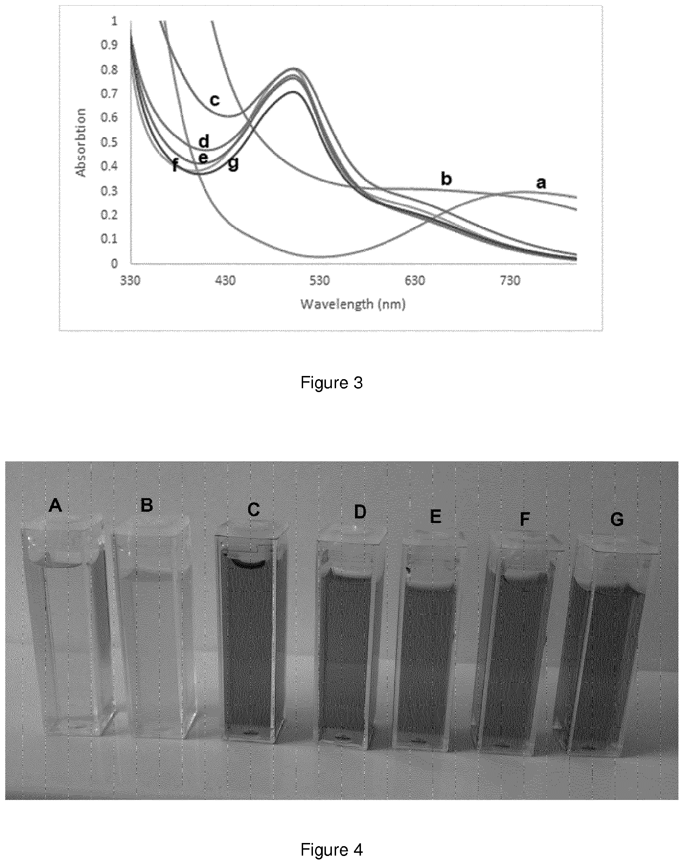

- Figure 3:: UV-VIS spectrum of APTMS/Cu(NO₃)₂ in molar ratio (a) 0 ,(b) 1 (c)3 (d)6.6, (e)10.41 (f)14.32 (g) 17.35.
- Figure 4:: Samples of colloid solutions of copper nanoparticles prepared at molar ratio APTMS/Cu(NO₃)₂: (a) 0 ,(b) 1, (c) 3, (d) 6.6, (e) 10.41, (f) 14.32, (g) 17.35.

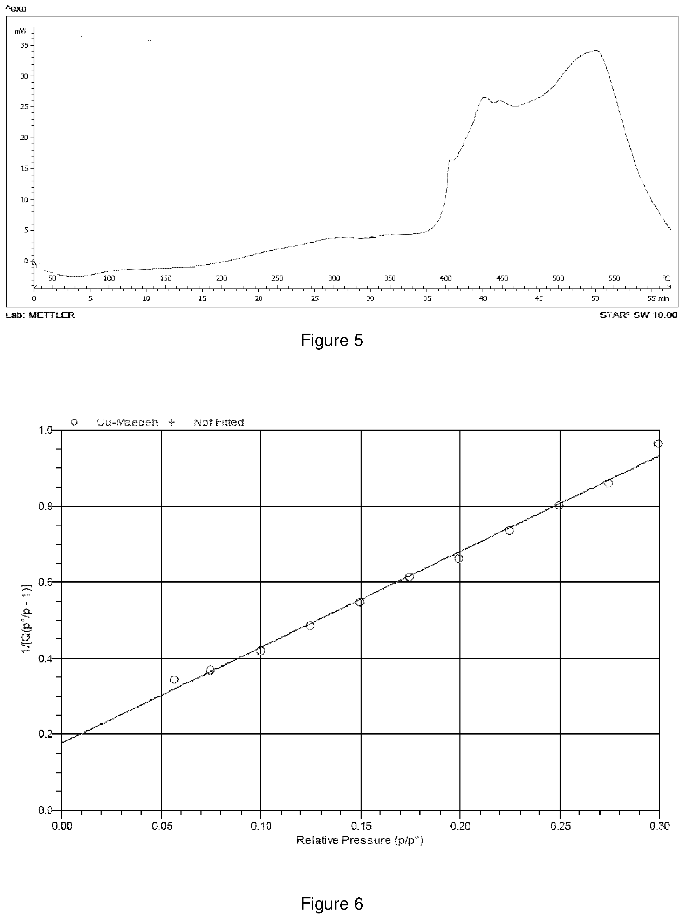

- Figure 5:: DSC curve of copper nanoparticles.
- Figure 6:: BET specific surface of copper nanoparticles.

### Embodiment 1: Synthesis of colloidal copper nanoparticles with APTMS capping agent (molar ratio of APTMS-to-Cu(NO₃)₂ = 1)

Copper nanoparticles were synthesized by the polyol method. The polyol synthesis involves heating a polyol with a salt precursor and a capping agent to generate metal colloids. In the case of copper nanostructures, 98% ethylene glycol, Cu(NO₃)₂. 3H₂O, and 97% APTMS serve as the polyol, salt precursor, and capping agent, respectively.

In a typical procedure, 7 ml of 98% ethylene glycol in a glass reactor is heated up to 160 °C in an oil bath for 60 min while stirring at a speed of 300 rpm. Afterwards, the temperature is decreased from 160 °C to 120 °C. Next, 3 ml of 0.05 M solution of copper nitrate in ethylene glycol is added dropwise in 30 seconds to the heated ethylene glycol solution and is stirred for 20 min at 120 °C, resulting in formation of a blue colloidal solution indicating formation of copper nanoparticles.

After 20 min of stirring at 120 °C, the glass reactor is removed from the oil bath and is stirred at room temperature. After 3 min of stirring copper nanoparticles in a glass reactor, 0.05 ml of 97% aminopropyletrimethoxysilane, is added dropwise to 10 ml of the prepared colloidal copper solution at room temperature until the molar ratio of APTMS-to-Cu(NO₃)₂ of 1 is obtained. The color of the colloidal copper solution is changed from light blue to green-blue. Then, the reaction is maintained for further 20 hours at room temperature (25 °C) and pH between 7 and 8.

### Embodiment 2: Synthesis of colloidal copper (Cu) nanoparticles with APTMS capping agent (molar ratio of APTMS-to-Cu(NO₃)₂= 3)

Copper nanoparticles were synthesized by the polyol method. The polyol synthesis involves heating a polyol with a salt precursor and a capping agent to generate metal colloids. In the case of copper nanostructures, 98% ethylene glycol, Cu(NO₃)₂. 3H₂O, and 97% APTMS serve as the polyol, salt precursor, and capping agent, respectively.

In a typical procedure, 7 ml of 98% ethylene glycol in a glass reactor is heated up to 160 °C in an oil bath for 60 min while stirring at a speed of 300 rpm. Afterwards, the temperature is decreased from 160 °C to 120 °C. Next, 3 ml of 0.05 M solution of copper nitrate in ethylene glycol is added dropwise in 30 seconds to the heated ethylene glycol solution and is stirred for 20 min at 120 °C, resulting in formation of a blue colloidal solution indicating formation of copper nanoparticles.

After 20 min of stirring at 120 °C, the glass reactor is removed from the oil bath and is stirred at room temperature. After 3 min of stirring copper nanoparticles in a glass reactor, 0.1 ml of 97% aminopropyletrimethoxysilane is added dropwise to 10 ml of the prepared colloidal copper solution at room temperature until the molar ratio of APTMS-to-Cu(NO₃)₂ of 3 is obtained. The color of the colloidal copper solution is changed from light blue to green-blue. Then, the reaction is maintained for further 20 hours at room temperature (25 °C), the pH between 7 and 8. After 20 hours of stirring the color of the solution changes from blue to reddish brown.

### Embodiment 3: Synthesis of colloidal copper (Cu) nanoparticles with APTMS capping agent (molar ratio of APTMS-to-Cu(NO₃)₂ = 6.6)

Copper nanoparticles were synthesized by the polyol method. The polyol synthesis involves heating a polyol with a salt precursor and a capping agent to generate metal colloids. In the case of copper nanostructures, 98% ethylene glycol, Cu(NO₃)₂. 3H₂O, and 97% APTMS serve as the polyol, salt precursor, and capping agent, respectively. In a typical procedure, 7 ml of 98% ethylene glycol in a glass reactor is heated up to 160 °C in an oil bath for 60 min while stirring at a speed of 300 rpm. Afterwards, the temperature is decreased from 160 °C to 120 °C. Next, 3 ml of 0.05 M solution of copper nitrate in ethylene glycol is added dropwise in 30 seconds to the heated ethylene glycol solution and is stirred for 20 min at 120 °C, resulting in formation of a blue colloidal solution indicating formation of copper nanoparticles.

After 20 min of stirring at 120 °C, the glass reactor is removed from the oil bath and is stirred at room temperature. After 3 min of stirring copper nanoparticles in a glass reactor, 0.2 ml of 97% aminopropyltrimethoxysilane is added dropwise to 10 ml of the prepared colloidal copper solution at room temperature until the molar ratio of APTMS-to-Cu(NO₃)₂ of 6.6 is obtained. The color of the colloidal copper solution is changed from light blue to dark blue. Then, the reaction is maintained for further 20 hours at room temperature (25 °C) and pH between 7 and 8. After 20 hours of stirring the color of the solution changes from dark blue to reddish brown.

### Embodiment 4: Synthesis of colloidal copper (Cu) nanoparticles with APTMS capping agent (molar ratio of APTMS-to-Cu(NO₃)₂ = 10.41)

Copper nanoparticles were synthesized by the polyol method. The polyol synthesis involves heating a polyol with a salt precursor and a capping agent to generate metal colloids. In the case of copper nanostructures, 98% ethylene glycol, Cu(NO₃)₂. 3H₂O, and 97% APTMS serve as the polyol, salt precursor, and capping agent, respectively.

In a typical procedure, 7 ml of 98% ethylene glycol in a glass reactor is heated up to 160 °C in an oil bath for 60 min while stirring at a speed of 300 rpm. Afterwards, the temperature is decreased from 160 °C to 120 °C. Next, 3 ml of 0.05 M solution of copper nitrate in ethylene glycol is added dropwise in 30 seconds to the heated ethylene glycol solution and is stirred for 20 min at 120 °C, resulting in formation of a blue colloidal solution indicating formation of copper nanoparticles.

After 20 min of stirring at 120 °C, the glass reactor is removed from the oil bath and is stirred at room temperature. After 3 min of stirring copper nanoparticles in a glass reactor, 0.3 ml of 97% aminopropyltrimethoxysilane is added dropwise to 10 ml of the prepared colloidal copper solution at room temperature until the molar ratio of APTMS to Cu(NO₃)₂ of 10.41 is obtained. The color of the colloidal copper solution is changed from light blue to dark blue. Then, the reaction is maintained for further 20 hours at room temperature (25 °C) and pH between 7 and 8. After 20 hours of stirring the color of the solution changes from blue to reddish brown.

### Embodiment 5: Synthesis of colloidal copper (Cu) nanoparticles with APTMS capping agent (molar ratio of APTMS-to-Cu(NO₃)₂ = 14.32)

Copper nanoparticles were synthesized by the polyol method. The polyol synthesis involves heating a polyol with a salt precursor and a capping agent to generate metal colloids. In the case of copper nanostructures, 98% ethylene glycol, Cu(NO₃)₂. 3H₂O, and 97% APTMS serve as the polyol, salt precursor, and capping agent, respectively.

In a typical procedure, 7 ml of 98% ethylene glycol in a glass reactor is heated up to 160 °C in an oil bath for 60 min while stirring at a speed of 300 rpm. Afterwards, the temperature is decreased from 160 °C to 120 °C. Next, 3 ml of 0.05 M solution of copper nitrate in ethylene glycol is added dropwise in 30 seconds to the heated ethylene glycol solution and is stirred for 20 min at 120 °C, resulting in formation of a blue colloidal solution indicating formation of copper nanoparticles.

After 15 min of stirring at 120 °C, the glass reactor is removed from the oil bath and is stirred at room temperature. After 3 min of stirring copper nanoparticles in a glass reactor, 0.4 ml of 97% aminopropyltrimethoxysilane is added dropwise to 10 ml of the prepared colloidal copper solution at room temperature until the molar ratio of APTMS to Cu(NO₃)₂ of 14.32 is obtained. The color of the colloidal copper solution is changed from light blue to dark blue. Then, the reaction is maintained for further 20 hours at room temperature (25 °C) and pH between 7 and 8. After 20 hours of stirring the color of the solution changes from blue to reddish brown.

### Embodiment 6: Synthesis of colloidal copper (Cu) nanoparticles with APTMS capping agent (molar ratio of APTMS-to-Cu(NO₃)₂ = 17.35)

Copper nanoparticles were synthesized by the polyol method. The polyol synthesis involves heating a polyol with a salt precursor and a capping agent to generate metal colloids. In the case of copper nanostructures, 98% ethylene glycol, Cu(NO₃)₂. 3H₂O, and 97% APTMS serve as the polyol, salt precursor, and capping agent, respectively.

In a typical procedure, 7 ml of 98% ethylene glycol in a glass reactor is heated up to 160 °C in an oil bath for 60 min while stirring at a speed of 300 rpm. Afterwards, the temperature is decreased from 160 °C to 120 °C. Next, 3 ml of 0.05 M solution of copper nitrate in ethylene glycol is added dropwise in 30 seconds to the heated ethylene glycol solution and is stirred for 20 min at 120 °C, resulting in formation of a blue colloidal solution indicating formation of copper nanoparticles.

After 20 min of stirring at 120 °C, the glass reactor is removed from the oil bath and is stirred at room temperature. After 3 min of stirring copper nanoparticles in a glass reactor, 0.5 ml of 97% aminopropyletrimethoxysilane is added dropwise to 10 ml of the prepared colloidal copper solution at room temperature until the molar ratio of APTMS-to-Cu(NO₃)₂ of 17.35 is obtained. The color of colloidal copper solution is changed from light blue to dark blue. Then, the reaction is maintained for further 20 hours at room temperature (25 °C) and pH between 7 and 8. After 20 hours of stirring the color of the solution changes from blue to reddish brown.

### Embodiment 7: Synthesis of colloidal copper (Cu) nanoparticles with APTMS capping agent (molar ratio of APTMS-to-Cu(NO₃)₂ = 20.2)

Copper nanoparticles were synthesized by the polyol method. The polyol synthesis involves heating a polyol with a salt precursor and a capping agent to generate metal colloids. In the case of copper nanostructures, 98% ethylene glycol, Cu(NO₃)₂. 3H₂O, and 97% APTMS serve as the polyol, salt precursor, and capping agent, respectively.

In a typical procedure, 7 ml of 98% ethylene glycol in a glass reactor is heated up to 160 °C in an oil bath for 60 min while stirring at a speed of 300 rpm. Afterwards, the temperature is decreased from 160 °C to 120 °C. Next, 3 ml of 0.05 M solution of copper nitrate in ethylene glycol is added dropwise in 30 seconds to the heated ethylene glycol solution and is stirred for 20 min at 120 °C, resulting in formation of a blue colloidal solution indicating formation of copper nanoparticles.

After 20 min of stirring at 120 °C, the glass reactor is removed from the oil bath and is stirred at room temperature. After 3 min of stirring copper nanoparticles in a glass reactor, 0.6 ml of 97% aminopropyltrimethoxysilane is added dropwise to 10 ml of the prepared colloidal copper solution at room temperature until the molar ratio of APTMS-to-Cu(NO₃)₂ of 20.2 is obtained. The color of colloidal copper solution is changed from light blue to dark blue. Then, the reaction is maintained for further 20 hours at room temperature (25 °C) and pH between 7 and 8. After 20 hours of stirring the color of the solution changes from blue to reddish brown.

### Embodiment 8: Preparation of textiles with copper nanoparticles and antimicrobial properties of colloid copper nanoparticles

A process for preparation of textiles with antimicrobial nanoparticles comprises the following steps:
- washing of 2 g of cotton textile with detergent,
- rinsing with deionized water,
- dipping in a basic solution of 5M sodium hydroxide for 10 min,
- washing with water,
- drying in a dryer for 1 hour,
- dipping in the prepared copper solution according to the invention for 48 hours,
- drying at room temperature for 3 hours, and
- additional drying in an oven for 3 hours at 70 °C.

A textile prepared according to the above described process is tested for its antimicrobial properties based on test American Society for Testing and Materials (ASTM) E2149-10. The antimicrobial activity of nanoparticles prepared according to the invention is 100% against bacterium *E. coli,* bacterium *S. aureus* and against fungus *Candida albicans.*

The synthesis process according to the invention enables preparation of copper nanoparticles with an appropriate size, stability, antimicrobial properties, which allows them to respond to external electrical field and have many fields of use, such as medicine, medical instruments and devices, textile industry, preparation of textiles with antimicrobial properties, water treatment, food processing and some others, for example catalysis and sensors. In addition, the described process eliminates use of acids and organic solvents, as well as extreme reaction conditions, which usually accompany synthesis of antimicrobial nanomaterials. This optimization leads to decreased costs and environment friendly technology.

## Claims

1. Process for synthesis of antimicrobial copper nanoparticles using functional alkoxysilanes as precursors, which function as capping agents, wherein the process comprises the following steps:
a) preparation of colloid copper nuclei with polyol synthesis, which involves heating a polyol medium to 160 °C and polyol synthesis of a red-brown colloid solution of ethylene glycol and copper nanoparticles;
b) heating of the prepared colloid solution of copper and ethylene glycol to 120 °C for 20 min and after removal of reaction flask from an oil bath, drop-wise addition of functional trialkoxysilane as the capping agent; and
c) mixing at room temperature for 20 hours until a red-brown coloured colloid solution of copper in ethylene glycol is formed.

2. The process for synthesis of antimicrobial copper nanoparticles using functional alkoxysilanes as capping agents according to claim 1, **characterized in that** the polyol synthesis of colloid copper nuclei is carried out so that it based on solvent reduction, wherein:
- the polyol reaction medium is a mixture of alcohols having many hydroxyl groups, such as ethylene glycol, and
- as salt precursor anorganic copper (II) salts are used in concentration 0.05 mol/L, wherein the preferred salt precursor is copper (II) nitrate trihydrate dissolved in ethylene glycol,
- and the reaction conditions of the polyol synthesis are:
• temperature 160 °C;
• time 1 hour;
• pH between 7 and 8;
resulting in copper nanoparticles having a spherical shape with particle size between 5 nm and 170 nm.

3. The process for synthesis of antimicrobial copper nanoparticles using functional alkoxysilanes as capping agents according to claim 1 or claim 2, **characterized in that**, in step a) prepared colloid solution of copper in ethylene glycol is cooled from 160 °C to 120 °C, then the reaction flask is removed from the heater and is stirred with a magnetic stirrer at room temperature, wherein the functional trialkoxysilane as a capping agent is added drop-wise to the colloid solution of copper in ethylene glycol while stirring,
wherein the capping agent may be a trialkoxysilane with a general formula R*Si(OR')₃, wherein R' is selected from a group consisting of methyl, ethyl, propyl, butyl and hexyl, and R* is selected from a functional, donor organic group consisting of amino, thiol, hydroxy, carbonyl, phosphate, nitrile, sulphate group, wherein the preferred capping agent is APTMS; and wherein the molar ratio between APTMS and copper (II) nitrate is between 1 and 20.2, preferably in the ratio: 1; 3; 6.6; 10.41; 14.32; 17.35; and 20.2.

4. The process for synthesis of antimicrobial copper nanoparticles using functional alkoxysilanes as capping agents according to claim 3, **characterized in that** the precursor is APTMS in concentration between 0.027 mol/L and 0.33 mol/L, and that the molar ratio between APTMS and Cu(NO₃)₂ is between 1 and 20.2.

5. The process for synthesis of antimicrobial copper nanoparticles using functional alkoxysilanes as capping agents according to claim 4, **characterized in that** the molar ratio between APTMS and Cu(NO₃)₂ is 1.

6. The process for synthesis of antimicrobial copper nanoparticles using functional alkoxysilanes as capping agents according to claim 4, **characterized in that** the molar ratio between APTMS and Cu(NO₃)₂ is 3.

7. The process for synthesis of antimicrobial copper nanoparticles using functional alkoxysilanes as capping agents according to claim 4, **characterized in that** the molar ratio between APTMS and Cu(NO₃)₂ is 6.6.

8. The process for synthesis of antimicrobial copper nanoparticles using functional alkoxysilanes as capping agents according to claim 4, **characterized in that** the molar ratio between APTMS and Cu(NO₃)₂ is 10.41.

9. The process for synthesis of antimicrobial copper nanoparticles using functional alkoxysilanes as capping agents according to claim 4, **characterized in that** the molar ratio between APTMS and Cu(NO₃)₂ is 14.32.

10. The process for synthesis of antimicrobial copper nanoparticles using functional alkoxysilanes as capping agents according to claim 4, **characterized in that** the molar ratio between APTMS and Cu(NO₃)₂ is 17.35.

11. The process for synthesis of antimicrobial copper nanoparticles using functional alkoxysilanes as capping agents according to claim 4, **characterized in that** the molar ratio between APTMS and Cu(NO₃)₂ is 20.2.

## Patentansprüche

1. Verfahren zur Synthese von antimikrobiellen Kupfer-Nanopartikeln unter Verwendung von funktionellen Alkoxysilanen als Vorläufer, die als Verkappungsmittel fungieren, wobei das Verfahren die folgenden Schritte umfasst:
a) Herstellung von kolloiden Kupferkernen mit Polyolsynthese, umfassend Erhitzen eines Polyolmediums auf 160°C und Polyolsynthese einer rotbraunen Kolloidlösung aus Ethylenglykol und Kupfernanopartikeln;
b) Erwärmen der hergestellten Kolloidlösung aus Kupfer und Ethylenglykol für 20 min auf 120°C und nach Entfernen des Reaktionskolbens aus einem Ölbad, tropfenweise Zugabe von funktionellem Trialkoxysilan als Verkappungsmittel; und
c) Rühren bei Raumtemperatur für 20 Stunden, bis eine rotbraune Kolloidlösung von Kupfer in Ethylenglykol gebildet wird.

2. Verfahren zur Synthese von antimikrobiellen Kupfer-Nanopartikeln unter Verwendung von funktionellen Alkoxysilanen als Verkappungsmittel nach Anspruch 1, **dadurch gekennzeichnet, dass** die Polyolsynthese von Kolloidkupferkernen so durchgeführt wird, dass sie auf Lösungsmittelreduktion basiert, wobei:
- das Polyolreaktionsmedium ein Gemisch aus Alkoholen mit vielen Hydroxylgruppen, wie Ethylenglycol, ist, und
- als Salzvorläufer werden anorganische Kupfer (II)-Salze in einer Konzentration von 0,05 mol/l eingesetzt, wobei der bevorzugte Salzvorläufer Kupfer-(II)-Nitrat-Trihydrat ist, das in Ethylenglykol gelöst ist,
- und die Reaktionsbedingungen der Polyolsynthese sind wie folgt:
• Temperatur 160°C;
▪ Zeit 1 Stunde;
▪ pH zwischen 7 und 8;
wobei sich Kupfernanopartikel mit einer Kugelform mit einer Partikelgröße zwischen 5 nm und 170 nm ergeben.

3. Verfahren zur Synthese von antimikrobiellen Kupfer-Nanopartikeln unter Verwendung von funktionellen Alkoxysilanen als Verkappungsmittel nach Anspruch 1 oder 2, **dadurch gekennzeichnet, dass** die in Schritt a) hergestellte Kolloidlösung von Kupfer in Ethylenglykol von 160°C auf 120°C abgekühlt wird, anschließend wird der Reaktionskolben von der Heizung entfernt und mit einem Magnetrührer bei Raumtemperatur gerührt, wobei das funktionelle Trialkoxysilan als ein Verkappungsmittel tropfenweise zu der Kolloidlösung von Kupfer in Ethylenglykol unter Rühren zugegeben wird, wobei das Verkappungsmittel ein Trialkoxysilan mit der allgemeinen Formel R*Si(OR')₃ sein kann, wobei R' aus einer Gruppe bestehend aus Methyl, Ethyl, Propyl, Butyl und Hexyl gewählt wird, und R* aus einer funktionellen, donororganischen Gruppe, bestehend aus der Amino-, Thiol-, Hydroxy-, Carbonyl-, Phosphat-, Nitril-, Sulfatgruppe gewählt wird, wobei das bevorzugte Verkappungsmittel APTMS ist;
und wobei das Molverhältnis zwischen APTMS und Kupfer (II) Nitrat zwischen 1 und 20,2 liegt, vorzugsweise im Verhältnis: 1; 3; 6,6; 10,41; 14,32; 17,35; und 20,2.

4. Verfahren zur Synthese von antimikrobiellen Kupfer-Nanopartikeln unter Verwendung von funktionellen Alkoxysilanen als Verkappungsmittel nach Anspruch 3, **dadurch gekennzeichnet, dass** der Vorläufer APTMS in einer Konzentration zwischen 0,027 mol/l und 0,33 mol/l vorliegt, und dass das Molverhältnis zwischen APTMS und Cu(NO₃)₂ zwischen 1 und 20,2 liegt.

5. Verfahren zur Synthese von antimikrobiellen Kupfer-Nanopartikeln unter Verwendung von funktionellen Alkoxysilanen als Verkappungsmittel nach Anspruch 4, **dadurch gekennzeichnet, dass** das Molverhältnis zwischen APTMS und Cu(NO₃)₂ 1 beträgt.

6. Verfahren zur Synthese von antimikrobiellen Kupfer-Nanopartikeln unter Verwendung von funktionellen Alkoxysilanen als Verkappungsmittel nach Anspruch 4, **dadurch gekennzeichnet, dass** das Molverhältnis zwischen APTMS und Cu(NO₃)₂ 3 beträgt.

7. Verfahren zur Synthese von antimikrobiellen Kupfer-Nanopartikeln unter Verwendung von funktionellen Alkoxysilanen als Verkappungsmittel nach Anspruch 4, **dadurch gekennzeichnet, dass** das Molverhältnis zwischen APTMS und Cu(NO₃)₂ 6,6 beträgt.

8. Verfahren zur Synthese von antimikrobiellen Kupfer-Nanopartikeln unter Verwendung von funktionellen Alkoxysilanen als Verkappungsmittel nach Anspruch 4, **dadurch gekennzeichnet, dass** das Molverhältnis zwischen APTMS und Cu(NO₃)₂ 10,41 beträgt.

9. Verfahren zur Synthese von antimikrobiellen Kupfer-Nanopartikeln unter Verwendung von funktionellen Alkoxysilanen als Verkappungsmittel nach Anspruch 4, **dadurch gekennzeichnet, dass** das Molverhältnis zwischen APTMS und Cu(NO₃)₂ 14,32 beträgt.

10. Verfahren zur Synthese von antimikrobiellen Kupfer-Nanopartikeln unter Verwendung von funktionellen Alkoxysilanen als Verkappungsmittel nach Anspruch 4, **dadurch gekennzeichnet, dass** das Molverhältnis zwischen APTMS und Cu(NO₃)₂ 17,35 beträgt.

11. Verfahren zur Synthese von antimikrobiellen Kupfer-Nanopartikeln unter Verwendung von funktionellen Alkoxysilanen als Verkappungsmittel nach Anspruch 4, **dadurch gekennzeichnet, dass** das Molverhältnis zwischen APTMS und Cu(NO₃)₂ 20,2 beträgt.

## Revendications

1. Procédé de synthèse de nanoparticules de cuivre antimicrobiennes à l'aide d'alcoxysilanes fonctionnels en tant que précurseurs, qui agissent en tant qu'agents de coiffage, le procédé comprenant les étapes suivantes :
a) préparation de noyaux de cuivre colloïdaux avec synthèse de polyols, qui implique le chauffage d'un milieu polyol à 160 °C et la synthèse de polyols d'une solution colloïdale rouge-brun de glycol d'éthylène et de nanoparticules de cuivre ;
b) chauffage à 120°C, pendant 20 min, de la solution colloïdale de cuivre et d'éthylène glycol préparée et après le retrait du flacon à réaction d'un bain d'huile, addition goutte-à-goutte de trialcoxysilane fonctionnel en tant qu'agent de coiffage ; et
c) mélange à température ambiante pendant 20 heures jusqu'à ce qu'une solution colloïdale de couleur rouge-brun de cuivre dans l'éthylèneglycol soit formée.

2. Procédé de synthèse de nanoparticules de cuivre antimicrobiennes à l'aide d'alcoxysilanes fonctionnels en tant qu'agents de coiffage selon la revendication 1, **caractérisé en ce que** la synthèse de polyols de noyaux de cuivre colloïdaux est réalisée de telle sorte qu'elle est basée sur une réduction de solvant :
- le milieu polyol réactionnel étant un mélange d'alcools ayant de nombreux groupes hydroxyles, tels que l'éthylène glycol, et
- comme précurseurs de sel, des sels de cuivre organique (II) sont utilisés à une concentration de 0,05 mol/L, le précurseur de sel préféré étant du trihydrate de nitrate de cuivre (II) dissous dans de l'éthylène glycol,
- et les conditions de réaction de la synthèse de polyols étant :
• température de 160°C ;
• durée de 1 heure ;
• pH entre 7 et 8 ;
ce qui permet d'obtenir des nanoparticules de cuivre ayant une forme sphérique ayant une taille de particule comprise entre 5 nm et 170 nm.

3. Procédé de synthèse de nanoparticules de cuivre antimicrobiennes à l'aide d'alcoxysilanes fonctionnels en tant qu'agents de coiffage selon la revendication 1 ou la revendication 2, **caractérisé en ce que**, à l'étape a) la solution colloïdale de cuivre préparée dans de l'éthylène glycol est refroidie de 160 °C à 120 °C, puis le flacon à réaction est retiré du dispositif de chauffage et est agité avec un agitateur magnétique à température ambiante, le trialcoxysilane fonctionnel en tant qu'agent de coiffage étant ajouté goutte à goutte à la solution colloïdale de cuivre dans l'éthylène glycol pendant l'agitation,
l'agent de coiffage peut être un trialcoxysilane de formule générale R*Si(OR')₃, dans laquelle R' est choisi dans un groupe constitué de méthyle, éthyle, propyle, butyle et hexyle, et R* est choisi parmi un groupe fonctionnel, un groupe organique donneur non fonctionnel consistant en un groupe amino, thiol, hydroxy, carbonyle, phosphate, nitrile, sulfate, l'agent de coiffage préféré étant l'APTMS ;
et le rapport molaire entre l'APTMS et le nitrate de cuivre (II) étant compris entre 1 et 20,2, de préférence dans le rapport : 1 ; 3; 6,6; 10,41 ; 14,32; 17,35; et 20,2.

4. Procédé de synthèse de nanoparticules de cuivre antimicrobiennes à l'aide d'alcoxysilanes fonctionnels en tant qu'agents de coiffage selon la revendication 3, **caractérisé en ce que** le précurseur est l'APTMS à une concentration comprise entre 0,027 mol/L et 0,33 mol/L, et que le rapport molaire entre l'APTMS et le Cu (NO₃)₂ est compris entre 1 et 20,2.

5. Procédé de synthèse de nanoparticules de cuivre antimicrobiennes à l'aide d'alcoxysilanes fonctionnels en tant qu'agents de coiffage selon la revendication 4, **caractérisé en ce que** le rapport molaire entre l'APTMS et le Cu(NO₃)₂ est 1.

6. Procédé de synthèse de nanoparticules de cuivre antimicrobiennes à l'aide d'alcoxysilanes fonctionnels en tant qu'agents de coiffage selon la revendication 4, **caractérisé en ce que** le rapport molaire entre l'APTMS et le Cu(NO₃)₂ est 3.

7. Procédé de synthèse de nanoparticules de cuivre antimicrobiennes à l'aide d'alcoxysilanes fonctionnels en tant qu'agents de coiffage selon la revendication 4, **caractérisé en ce que** le rapport molaire entre l'APTMS et le Cu(NO₃)₂ est 6,6.

8. Procédé de synthèse de nanoparticules de cuivre antimicrobiennes à l'aide d'alcoxysilanes fonctionnels en tant qu'agents de coiffage selon la revendication 4, **caractérisé en ce que** le rapport molaire entre l'APTMS et le Cu(NO₃)₂ est 10,41.

9. Procédé de synthèse de nanoparticules de cuivre antimicrobiennes à l'aide d'alcoxysilanes fonctionnels en tant qu'agents de coiffage selon la revendication 4, **caractérisé en ce que** le rapport molaire entre l'APTMS et le Cu(NO₃)₂ est 14,32.

10. Procédé de synthèse de nanoparticules de cuivre antimicrobiennes à l'aide d'alcoxysilanes fonctionnels en tant qu'agents de coiffage selon la revendication 4, **caractérisé en ce que** le rapport molaire entre l'APTMS et le Cu(NO₃)₂ est 17,35.

11. Procédé de synthèse de nanoparticules de cuivre antimicrobiennes à l'aide d'alcoxysilanes fonctionnels en tant qu'agents de coiffage selon la revendication 4, **caractérisé en ce que** le rapport molaire entre l'APTMS et le Cu(NO₃)₂ est 20,2.
